# EUROPEAN PATENT APPLICATION

(11) **EP 4 822 767 A1**
(43) Date of publication of application: **14.10.2026**
(21) Application number: 24918994.5
(22) Date of filing: 20.12.2024
(51) Int. Cl.: H01M 4/36, H01M 4/525, H01M 10/052, C01G 53/44, H01M 4/02

(54) **POSITIVE ELECTRODE ACTIVE MATERIAL PRECURSOR AND METHOD FOR MANUFACTURING POSITIVE ELECTRODE ACTIVE MATERIAL PRECURSOR**

(30) Priority: 15.01.2024 KR 20240006138
(71) Applicant: LG Chem, Ltd., Seoul 07336 (KR)
(72) Inventor: KIM, Hyeon Jin, Daejeon 34122 (KR); BEAK, Chan Ju, Daejeon 34122 (KR); AN, Sang Hyun, Daejeon 34122 (KR); KIM, Woo Hyun, Daejeon 34122 (KR)
(74) Representative: Hoffmann Eitle
(86) International application number: PCT/KR2024/020896
(87) International publication number: WO 2025/154970

(57) **Abstract**

The present invention relates to a method for manufacturing a positive electrode active material precursor having excellent sphericity, uniform particle size distribution, and alleviated particle agglomeration by performing a reaction of producing a positive electrode active material precursor seed in a continuous stirred tank reactor (CSTR), and introducing the produced precursor seed into a batch reactor to be grown, wherein the content of the positive electrode active material precursor particle seed is introduced into the batch reactor in an appropriate amount.

## Description

### [Technical Field]

### CROSS-REFERENCE TO RELATED APPLICATION

The present application claims priority to Korean Patent Application No. 2024-0006138, filed on January 15, 2024, the entire content of which is incorporated herein for all purposes by reference.

### Technical Field

The present invention relates to a positive electrode active material precursor and a method for manufacturing the positive electrode active material precursor.

### [Background Art]

As technology development and demand for mobile devices and electric vehicles increase, demand for secondary batteries as an energy source is rapidly increasing. Among the secondary batteries, a lithium secondary battery, which has high energy density and voltage, long cycle life and low self-discharge rate, has been commercialized and is widely used.

Lithium composite transition metal oxides are used as a positive electrode active material for lithium secondary batteries, and recently, as demand for vehicle batteries requiring long-distance driving ability has increased, lithium nickel-cobalt-manganese-based metal oxides with high nickel content are being actively developed to secure high capacity.

Meanwhile, the higher the nickel content, the more advantageous it is to secure high capacity, but there is a problem that structural stability, chemical stability, thermal stability, etc. decrease. In order to solve this problem, the development of positive electrode active materials having a single particle form and various diameters is underway. In order to have uniform quality in positive electrode active materials in the form of a single particle and positive electrode active materials having various diameters, heat must be transferred evenly and effectively during the calcination process of the positive electrode active material precursor, and in order for the heat to be transferred evenly and effectively, the positive electrode active material precursor must have small and uniform particle sizes and high sphericity.

Meanwhile, as a method for manufacturing positive electrode active material precursors, which are raw materials for positive electrode materials, there are the following representative methods: a method for manufacturing positive electrode active material precursors using a continuous stirred tank reactor (CSTR), and a method for manufacturing positive electrode active material precursors using a batch reactor.

A positive electrode active material precursor manufactured using the continuous stirred tank reactor has high productivity through a continuous process, but has a wide particle size distribution, while a precursor manufactured using the batch reactor has relatively low productivity, but has a narrow particle size distribution. However, when a precursor is manufactured using the batch reactor, the precursor seed formation step and the precursor particle growth step are performed simultaneously within the reactor, so it is difficult to reproduce or predict the same particle size distribution and average particle size for each reaction. In addition, when mass production is performed using the batch reactor, the larger the reactor becomes, the more the stirrer must rotate at a high speed, which causes difficulties in terms of equipment, and the particle size distribution of the seed becomes wider, which also widens the final particle size distribution.

Therefore, there is a need for a method for reproducibly manufacturing a positive electrode active material precursor having a uniform particle size.

### [Prior Art Literature]

### [Patent Documents]

(Patent Document 1) CN 111196613 B

### [Disclosure]

### [Technical Problem]

An object to be achieved by the present invention is to provide a method for manufacturing a positive electrode active material precursor having excellent sphericity, uniform particle size distribution, and reduced particle agglomeration.

### [Technical Solution]

(1) The present invention provides a positive electrode active material precursor having an average value of sphericity according to Mathematical Equation 1 below of 0.73 or more and 1.0 or less, a span value according to Mathematical Equation 4 below of 0.4 or more and 0.9 or less, and a ratio of multi-particles, which are particles having an aspect ratio value of less than 1.4 obtained by shape analysis of an SEM image, of 6% or less:
   [Mathematical Equation 1] $Sphericity = 4 π \times \frac{A}{{P}^{2}}$

   wherein:
   A is an area of the particle measured by shape analysis of an SEM image, and
   P is a circumference of the particle measured by shape analysis of an SEM image. [Mathematical Equation 4] $Span = \left({D}_{95}-{D}_{5}\right) {/ D}_{50}$
(2) The present invention provides the positive electrode active material precursor according to (1) above, wherein the span value according to Mathematical Equation 1 above is 0.60 or more and 0.85 or less.
(3) The present invention provides the positive electrode active material precursor according to (1) or (2) above, wherein the ratio of multi-particles is 4% or less.
(4) The present invention provides the positive electrode active material precursor according to any one of (1) to (3) above, wherein the average value of sphericity is 0.75 or more and 0.90 or less.
(5) The present invention provides the positive electrode active material precursor according to any one of (1) to (4) above, wherein the average particle diameter (D₅₀) is 2 µm or more and 11 µm or less.
(6) The present invention provides a method for manufacturing a positive electrode active material precursor, including the steps of: (S1) continuously introducing and mixing a transition metal-containing solution, an ammonium cation complex forming agent, and a basic aqueous solution into a continuous stirred tank reactor (CSTR) to prepare a seed solution including a positive electrode active material precursor seed; and (S2) introducing the seed solution prepared in step (S1) into a batch reactor and stirring the seed solution, and then introducing a transition metal-containing solution, an ammonium cation complex forming agent, and a basic aqueous solution to grow positive electrode active material precursor particles, wherein the content of the positive electrode active material precursor seed included in the seed solution introduced into the batch reactor in step (S2) is 4% or more and 11% or less of the theoretical yield of the positive electrode active material precursor finally manufactured.
(7) The present invention provides the method for manufacturing a positive electrode active material precursor according to (6) above, wherein the content of the positive electrode active material precursor seed included in the seed solution introduced into the batch reactor in step (S2) is 4% or more and 9% or less of the theoretical yield of the positive electrode active material precursor finally manufactured.
(8) The present invention provides the method for manufacturing a positive electrode active material precursor according to (6) or (7) above, wherein in the step (S2), a concentration of the ammonium cation complex forming agent in a reactant and a pH of the reactant are controlled to be the same as in the step (S1).
(9) The present invention provides a positive electrode active material which is a calcined product of a mixture of the positive electrode active material precursor according to any one of (1) to (5) above and a lithium raw material.
(10) The present invention provides a lithium secondary battery comprising the positive electrode active material according to (9).

### [Advantageous Effects]

According to the method for manufacturing the positive electrode active material precursor of the present invention, a positive electrode active material precursor having a uniform particle size, high sphericity, and reduced particle agglomeration can be provided.

### [Description of Drawings]

FIG. 1 is an SEM image (2k) showing a positive electrode active material precursor manufactured in Example 1.
FIG. 2 is an SEM image (2k) showing a positive electrode active material precursor manufactured in Example 2.
FIG. 3 is an SEM image (2k) showing a positive electrode active material precursor manufactured in Comparative Example 1.
FIG. 4 is an SEM image (2k) showing a positive electrode active material precursor manufactured in Comparative Example 2.

### [Best Modes of the Invention]

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his/her invention.

In this specification, a primary particle refers to a minimum unit particle observed during scanning electron microscope (SEM) measurement. A secondary particle refers to an aggregate, i.e., a secondary structure, in which primary particles are aggregated together by physical or chemical bonding between the primary particles without an intentional aggregation or assembly process for the primary particles constituting the secondary particle.

In this specification, D₅, D₅₀, and D₉₅ may be defined as particle diameters corresponding to 5%, 50%, and 95% of the volume cumulative amount in a particle size distribution curve (a graph curve of a particle size distribution diagram) of the particle, respectively. The D₅, D₅₀, and D₉₅ can be measured using, for example, a laser diffraction method. The laser diffraction method can generally measure particle diameters in the range of several nm to several mm, and can obtain results with high reproducibility and high resolution. In this specification, the average particle diameter refers to the D₅₀.

In this specification, sphericity is a value obtained by shape analysis of a scanning electron microscope (SEM) image, and can be calculated from a ratio between the area and the square of the circumference. Specifically, the sphericity is a value calculated by measuring the planar area (A) and planar circumference (P) shown in the SEM image of each particle by shape analysis of the SEM image, and then substituting them into Mathematical Equation 1 below:
[Mathematical Equation 1] $Sphericity = 4 π \times \frac{A}{{P}^{2}}$

The closer the sphericity is to 1, the closer it is to a circle.

Meanwhile, the sphericity may be maintained within an error range regardless of the magnification of the SEM image.

In this specification, a tap density is an apparent density of particles obtained by filling 50 g of a positive electrode active material precursor in a 100 ml container and then vibrating (tapping 3,000 times or more) under certain conditions (stroke of 10 to 50 mm), and can be measured using a tap density tester (KYT-4000, Seishin).

In this specification, pH is a value converted to a 25°C pH value by substituting a pH value measured at any temperature into a conversion equation represented by Mathematical Equation 2 below:

[Mathematical Equation 2] $pH \left(25°C\right) = \left(measurement temperature-50\right) * 0.0333 + 0.8325 + measured pH$

In this specification, a "precursor multi-particle" refers to a particle having an aspect ratio of 1.4 or more. In principle, a multi-particle refers to a particle in which several particles are aggregated, not a single particle. However, in the precursor formation reaction, fine particles grow by agglomerating from the beginning of the reaction, and as the growth continues, they gradually change to be as if they were a single particle. Therefore, after sufficient particle growth has been achieved in the precursor formation reaction, it is difficult to distinguish the produced precursor into a multi-particle and a single particle by the principled concept. However, when analyzing the SEM image, particles grown initially by agglomerating fine particles and particles grown without agglomerating are clearly distinguished with the naked eye. Therefore, in this specification, particles having an aspect ratio of 1.4 or more are defined as multi-particles in order to distinguish between the particles grown initially by agglomerating fine particles and the particles grown without agglomerating.

Meanwhile, the aspect ratio of the particle is a value obtained by shape analysis of the SEM image, and may be defined as a ratio of a major axis length to a minor axis length on a cross-section of the positive electrode active material precursor particle, i.e., on a plane shown in the SEM image. Specifically, when a direction in which the dispersion of the outer points of the particle (λ₁²) is the largest is called a major axis, and a direction in which the dispersion of the outer points of the particle (λ₂²) is the smallest is called a minor axis, the aspect ratio is λ₁/λ₂. The aspect ratio may be maintained within an error range regardless of the magnification of the SEM image.

### <Method for Manufacturing a Positive Electrode Active Material Precursor>

The present invention provides a method for manufacturing a positive electrode active material precursor.

A method for manufacturing a positive electrode active material precursor according to one embodiment of the present invention includes the steps of: (S1) continuously introducing and mixing a transition metal-containing solution, an ammonium cation complex forming agent, and a basic aqueous solution into a continuous stirred tank reactor (CSTR) to prepare a seed solution including a positive electrode active material precursor seed; and (S2) introducing the seed solution prepared in step (S1) into a batch reactor to grow positive electrode active material precursor particles, wherein the content of the positive electrode active material precursor seed included in the seed solution introduced into the batch reactor in step (S2) is 4% or more and 11% or less of the theoretical yield of the positive electrode active material precursor finally manufactured.

The present inventors have found that when a reaction of producing a positive electrode active material precursor seed is performed in a continuous stirred tank reactor (CSTR), and the produced precursor seed is introduced into a batch reactor to be grown, wherein the content of the positive electrode active material precursor particle seed introduced into the batch reactor satisfies an appropriate amount, a positive electrode active material precursor having excellent sphericity, uniform particle size distribution, and alleviated particle agglomeration is manufactured, thereby completing the present invention.

Hereinafter, each step of the method for manufacturing a positive electrode active material precursor according to one embodiment of the present invention will be described.

### 1. Step (S1)

According to one embodiment of the present invention, the step (S1) may be a step of continuously introducing and mixing a transition metal-containing solution, an ammonium cation complex forming agent, and a basic aqueous solution into a continuous stirred tank reactor (CSTR) to prepare a seed solution including a positive electrode active material precursor particle seed.

According to one embodiment of the present invention, the transition metal-containing solution may include a cation of at least one metal selected from nickel (Ni), manganese (Mn), cobalt (Co), tungsten (W), molybdenum (Mo), chromium (Cr), and aluminum (Al). The metal ion-containing solution may include an acetate, a nitrate, a sulfate, a halide, a sulfide, a hydroxide, an oxide, an oxyhydroxide, or the like of the metals, and is not particularly limited as long as it can be dissolved in water.

For example, the cobalt (Co) may be included as Co(OH)₂, CoOOH, Co(OCOCH₃)₂ · 4H₂O, Co(NO₃)₂ · 6H₂O, CoSO₄, Co(SO₄)₂ · 7H₂O, or the like, and any one or a mixture of two or more thereof may be used. In addition, the nickel (Ni) may be included as Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, a nickel halide, or the like, and any one or a mixture of two or more thereof may be used. In addition, the manganese (Mn) may be included as manganese oxides such as Mn₂O₃, MnO₂, and Mn₃O₄; manganese salts such as MnCO₃, Mn(NO₃)₂, MnSO₄, manganese acetate, dicarboxylic acid manganese salt, manganese citrate, and fatty acid manganese salt; oxyhydroxide, manganese chloride, etc., and any one or a mixture of two or more thereof may be used.

Meanwhile, when the precursor finally manufactured further includes a doping element (M) other than nickel (Ni), manganese (Mn), cobalt (Co), tungsten (W), molybdenum (Mo), chromium (Cr), and aluminum (Al) (for example, M is at least one element selected from Zr, Ti, Mg, Ta, and Nb), a raw material containing the doping element may be optionally further added when preparing the transition metal-containing solution. The doping element-containing raw material may be acetate, nitrate, sulfate, halide, sulfide, hydroxide, oxide, oxyhydroxide, or the like containing the doping element, and any one alone or a mixture of two or more thereof may be used. For example, when the doping element is Zr, zirconium oxide or the like may be used.

According to one embodiment of the present invention, the ammonium cation complex forming agent may include at least one selected from NH₄OH, (NH₄)₂SO₄, NH₄NO₃, NH₄Cl, CH₃COONH₄, and NH₄CO₃. As the solvent, water, or a mixture of water and an organic solvent (specifically, alcohol, etc.) that is uniformly miscible with water may be used.

According to one embodiment of the present invention, the basic aqueous solution may include at least one selected from an alkali metal hydrate, an alkali metal hydroxide, an alkaline earth metal hydrate, and an alkaline earth metal hydroxide. For example, the basic aqueous solution may include NaOH, KOH, Ca(OH)₂, or the like, and as the solvent, water, or a mixture of water and an organic solvent (specifically, alcohol, etc.) that is uniformly miscible with water may be used.

According to one embodiment of the present invention, the content of the ammonium cation complex forming agent introduced in the step (S1) may be 4 parts by weight to 100 parts by weight, and preferably 4 parts by weight to 30 parts by weight, relative to 100 parts by weight of the transition metal-containing solution introduced in the step (S1).

Meanwhile, the step (S1) may be performed under a pH of 11.3 to 14.5 of the reaction solution, preferably under a pH of 11.4 to 14, and more specifically under a pH of 11.4 to 12.5. The basic aqueous solution may be used to adjust the pH of the reaction solution. When the content of the ammonium cation complex forming agent introduced in the step (S1) is within the above range or the pH of the reaction solution is within the above range, it may be advantageous to adjust the size of the seed.

According to one embodiment of the present invention, the average particle diameter (D₅₀) of the positive electrode active material precursor seed may be 20% to 70% of the average particle diameter (D₅₀) of the positive electrode active material precursor particles finally manufactured. Specifically, the average particle diameter (D₅₀) of the positive electrode active material precursor seed may be 0.5 µm to 6 µm, preferably 1 µm to 5.5 µm, or 1.5 µm to 5 µm. When the size of the seed is within the above range, the particle size of the positive electrode active material precursor seed formed can be uniform, and thus, a positive electrode active material precursor having a narrow particle size distribution can be reproducibly manufactured.

According to one embodiment of the present invention, the mixing in the step (S1) may be performed under a temperature condition of 10°C to 80°C. Specifically, it may be performed under a temperature condition of 30°C to 60°C, more specifically, under a temperature condition of 50°C to 60°C. When the temperature condition is within the above range, the transition metal ions can be sufficiently dissolved while preventing the introduced solutions from volatilizing, so that the positive electrode active material precursor seed can be properly formed.

### 2. Step (S2)

According to one embodiment of the present invention, the step (S2) may be a step of introducing the seed solution prepared in the step (S1) into a batch reactor and stirring the seed solution, and then introducing a transition metal-containing solution, an ammonium cation complex forming agent, and a basic aqueous solution to grow positive electrode active material precursor particles.

According to one embodiment of the present invention, before the seed solution is introduced into the batch reactor in the step (S2), the batch reactor may be purged with an inert gas, for example, nitrogen, to remove dissolved oxygen and create a non-oxidizing atmosphere.

According to one embodiment of the present invention, after the batch reactor is created to have a non-oxidizing atmosphere in the step (S2), the seed solution may be introduced.

According to one embodiment of the present invention, the content of the positive electrode active material precursor seed transferred to the batch reactor in the step (S2) may be 4% or more and 11% or less, and specifically, 4% or more and 9% or less, of the theoretical yield of the positive electrode active material precursor finally manufactured. Specifically, the content of the positive electrode active material precursor seed transferred to the batch reactor in the step (S2) may be 4.0% or more and 10.5% or less, 10.0% or less, 9.5% or less, or 9.0% or less of the theoretical yield of the positive electrode active material precursor finally manufactured.

When the content of the positive electrode active material precursor seed transferred to the batch reactor in the step (S2) satisfies the above range, a positive electrode active material precursor having excellent sphericity, uniform particle size distribution, and alleviated particle agglomeration can be manufactured. When the content of the positive electrode active material precursor seed transferred to the batch reactor in the step (S2) is less than the above range, the growth of the average particle diameter becomes very fast and the growth cannot take place for a sufficient time, so that the sphericity decreases, and when it is more than the above range, the particles are agglomerated, so that the sphericity decreases.

Meanwhile, the theoretical yield of the positive electrode active material precursor finally manufactured refers to the yield of the positive electrode active material precursor obtained when the positive electrode active material precursor seed is grown for 24 hours in the step (S2). Specifically, the theoretical yield of the positive electrode active material precursor finally manufactured can be calculated by Mathematical Equation 3 below:

[Mathematical Equation 3] 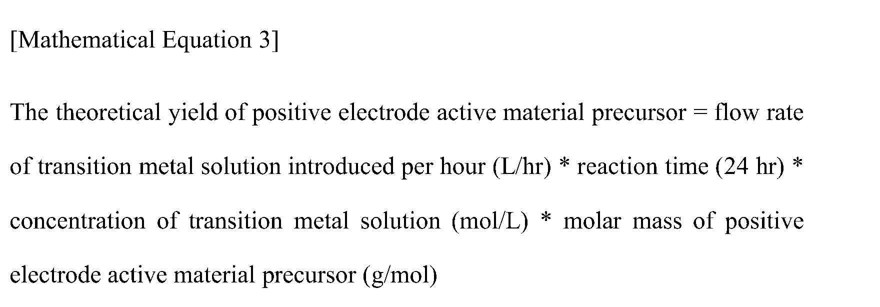 The theoretical yield of positive electrode active material precursor = flow rate of transition metal solution introduced per hour (L/hr) * reaction time (24 hr) * concentration of transition metal solution (mol/L) * molar mass of positive electrode active material precursor (g/mol)

Thereafter, the seed solution may be stirred at a rotation speed of 700 rpm or more and 1000 rpm or less under a temperature condition of 10°C to 80°C.

According to one embodiment of the present invention, the stirring in the step (S2) may be performed under a temperature condition of 10°C to 80°C. Specifically, it may be performed under a temperature condition of 30°C to 60°C, more specifically, under a temperature condition of 50°C to 60°C. When the temperature condition is within the above range, the transition metal ions can be sufficiently dissolved while preventing the introduced solutions from volatilizing, so that the positive electrode active material precursor particles can be easily formed.

According to one embodiment of the present invention, the stirring in the step (S2) may be performed at a rotation speed of 30 rpm or more and 1,000 rpm or less. Specifically, it may be performed at a rotation speed of 750 rpm or more and 950 rpm or less, and more specifically, at a rotation speed of 800 rpm or more and 900 rpm or less. When the rotation speed is within the above range, the transition metal ions can be sufficiently dissolved while preventing the introduced solutions from volatilizing, so that the positive electrode active material precursor particles can be easily formed.

According to one embodiment of the present invention, the stirring in the step (S2) may be performed for 10 minutes to 1 hour. The stirring time within the above range is a time required to grow the size of the positive electrode active material precursor particles to a target average particle diameter (D₅₀). When the performing time is within the above range, positive electrode active material precursor particles having a narrow particle distribution can be economically manufactured.

Meanwhile, in the step (S2), after stirring the seed solution, a transition metal solution, an ammonium ion-containing solution, and a basic aqueous solution may be additionally mixed to grow positive electrode active material precursor particles. The transition metal ion-containing solution, the ammonium ion-containing solution, and the basic aqueous solution introduced in the step (S2) have been described in step (S1) above, so a detailed description thereof will be omitted below.

As described above, when the transition metal solution, the ammonium ion-containing solution, and the basic aqueous solution are additionally mixed after stirring the seed solution, the stirring of the batch reactor may be performed at a rotation speed lowered to 500 rpm or more and 650 rpm or less. Accordingly, the growth of the positive electrode active material precursor particles can occur smoothly.

As described above, when the transition metal solution, the ammonium ion-containing solution, and the basic aqueous solution are additionally mixed after stirring the seed solution, it may be performed under the pH of the reaction solution of 11 to 14.5, preferably under 11.2 to 14, and more specifically under 11.4 to 12.8. When the pH of the reaction solution in the step (S2) is within the above range, it may be advantageous to uniformly adjust the size of the positive electrode active material precursor particles.

The reaction for growing the positive electrode active material precursor particles in the step (S2) may be performed for 10 to 100 hours. The reaction time within the above range is a time required to grow the size of the positive electrode active material precursor particles to a target average particle diameter (D₅₀). When the performing time is within the above range, positive electrode active material precursor particles having a narrow particle distribution can be economically manufactured.

According to one embodiment of the present invention, in the step (S2), the concentration of the ammonium cation complex forming agent in the reactant and the pH of the reactant may be controlled to be the same as in the step (S1). In this case, the growth of the positive electrode active material precursor can be achieved more easily.

### <Positive Electrode Active Material Precursor>

The present invention provides a positive electrode active material precursor manufactured by the method for manufacturing a positive electrode active material precursor.

According to one embodiment of the present invention, the positive electrode active material precursor has an average value of sphericity according to Mathematical Equation 1 below of 0.73 or more and 1.0 or less, a span value according to Mathematical Equation 4 below of 0.4 or more and 0.9 or less, and a ratio of multi-particles, which are particles having an aspect ratio value of less than 1.4 obtained by shape analysis of an SEM image, of 6% or less:

[Mathematical Equation 1] $Sphericity = 4 π \times \frac{A}{{P}^{2}}$
wherein:
A is an area of the particle measured by shape analysis of an SEM image, and
P is a circumference of the particle measured by shape analysis of an SEM image.
[Mathematical Equation 4] $Span = \left({D}_{95}-{D}_{5}\right) / {D}_{50}$

In this specification, the average value of the sphericity of the positive electrode active material precursor refers to an average value obtained by measuring the sphericity of each particle of the positive electrode active material precursor.

In this specification, D₅, D₅₀, and D₉₅ may be defined as particle diameters corresponding to 5%, 50%, and 95% of the volume cumulative amount in a particle size distribution curve (a graph curve of a particle size distribution diagram) of the particle, respectively. The D₅, D₅₀, and D₉₅ can be measured using, for example, a laser diffraction method. The laser diffraction method can generally measure particle diameters in the range of several nm to several mm, and can obtain results with high reproducibility and high resolution.

The positive electrode active material precursor according to one embodiment of the present invention may have a uniform particle size, a high sphericity, and a multi-particle ratio of 6% or less. Accordingly, the uniformity of calcination of the positive electrode material can be improved, thereby reducing Li byproducts and improving the performance of the positive electrode material.

According to one embodiment of the present invention, the positive electrode active material precursor may have a span value according to Mathematical Equation 1 above of 0.40 or more and 0.87 or less, and for specific examples, 0.45 or more, 0.5 or more, 0.55 or more, 0.6 or more, 0.65 or more, 0.7 or more, or 0.75 or more, and 0.89 or less, 0.88 or less, 0.87 or less, 0.86 or less, or 0.85 or less.

According to one embodiment of the present invention, the average value of the sphericity of the positive electrode active material precursor may be 0.73 or more and 1.0 or less, and for specific examples, may be 0.732 or more, 0.734 or more, 0.736 or more, 0.738 or more, or 0.74 or more, and 0.98 or less, 0.96 or less, 0.94 or less, 0.92 or less, or 0.90 or less.

According to one embodiment of the present invention, the multi-particle ratio of the positive electrode active material precursor may be 6% or less, and for specific examples, 6.0% or less, 5.9% or less, 5.8% or less, 5.7% or less, or 5.6% or less, and 0.5% or more, 1% or more, 1.5% or more, or 2% or more.

According to one embodiment of the present invention, the average particle diameter (D₅₀) of the positive electrode active material precursor may be 2 µm or more and 11 µm or less, and for specific examples, 2.5 µm or more, 3 µm or more, 3.5 µm or more, or 4 µm or more.

According to one embodiment of the present invention, the positive electrode active material precursor may have a composition represented by Chemical Formula 1 or Chemical Formula 2 below:

[Chemical Formula 1] Niₐ₁Co_{b1}Mn_{c1}Me_{d1}(OH)₂

wherein Me is at least one selected from W, Al, Cu, Fe, Ba, V, Cr, Ti, Zr, Zn, In, Ta, Y, In, La, Sr, Ga, Sc, Gd, Sm, Ca, Ce, Nb, Mg, B, and Mo, and 0.7≤a1<1.0, 0<b1<0.3, 0<c1<0.3, and 0≤d1≤0.02,

[Chemical Formula 2] Niₐ₂Co_{b2}Mn_{c2}Me_{d2}O·OH

wherein Me is at least one selected from W, Al, Cu, Fe, Ba, V, Cr, Ti, Zr, Zn, In, Ta, Y, In, La, Sr, Ga, Sc, Gd, Sm, Ca, Ce, Nb, Mg, B, and Mo, and 0.7≤a2<1.0, 0<b2<0.3, 0<c2<0.3, and 0≤d2≤0.02.

According to one embodiment of the present invention, the positive electrode active material precursor may include nickel (Ni) in an amount of 70 mol% or more, specifically 80 mol% or more, and more specifically 85 mol% or more, based on the total number of moles of metals excluding lithium.

According to one embodiment of the present invention, the positive electrode active material precursor may have a tap density of 1.85 g/ml or more and 2.0 g/ml or less, specifically 1.87 g/ml to 1.99 g/ml, and more specifically 1.89 g/ml to 1.97 g/ml. In this case, since the tap density is high compared to the average particle diameter, the packing ratio can be increased during calcination for manufacturing the positive electrode active material, so there is an advantage in that the productivity of the positive electrode active material can be improved.

### <Positive Electrode Active Material>

The present invention provides a positive electrode active material which is a calcined product of a mixture of the above positive electrode active material precursor and a lithium raw material.

According to one embodiment of the present invention, the positive electrode active material may be manufactured by mixing the positive electrode active material precursor of the present invention with a lithium raw material and then calcining the mixture.

According to one embodiment of the present invention, the lithium raw material may be one alone or a mixture of two or more of a lithium-containing carbonate (e.g., lithium carbonate, etc.), a hydrate (e.g., lithium hydroxide hydrate (LiOH·H₂O), etc.), a hydroxide (e.g., lithium hydroxide, etc.), a nitrate (e.g., lithium nitrate (LiNO₃), etc.), and a chloride (e.g., lithium chloride (LiCl), etc.).

Meanwhile, the mixing of the positive electrode active material precursor and the lithium raw material may be performed by solid-state mixing, and a mixing ratio of the positive electrode active material precursor and the lithium raw material may be determined in a range that satisfies an atomic fraction of each component in the positive electrode active material to be finally manufactured.

According to one embodiment of the present invention, the positive electrode active material precursor and the lithium raw material may be mixed in an amount such that the molar ratio of transition metal:Li is 1:0.9 to 1:1.2, specifically, 1:0.98 to 1:1.1. When the precursor and the lithium raw material are mixed within the above range, a positive electrode active material exhibiting excellent capacity characteristics can be manufactured.

According to one embodiment of the present invention, the calcination may be performed at 600°C to 1000°C, specifically 700°C to 900°C, and the calcination time may be 5 hours to 30 hours, specifically 8 hours to 15 hours.

According to one embodiment of the present invention, the positive electrode active material may be manufactured from the positive electrode active material precursor according to the present invention and thus may be in the form of a secondary particle.

According to one embodiment of the present invention, the positive electrode active material may have a composition represented by Chemical Formula 3 below:

[Chemical Formula 3] Li₁₊ₓNiₐ₃Co_{b3}M1_{c3}M2_{d3}O₂

wherein M1 is at least one selected from Mn and Al, and M2 is at least one selected from W, Cu, Fe, Ba, V, Cr, Ti, Zr, Zn, In, Ta, Y, In, La, Sr, Ga, Sc, Gd, Sm, Ca, Ce, Nb, Mg, B, and Mo, and -0.2≤x≤0.2, 0.7≤a3<1.0, 0<b3<0.3, 0<c3<0.3, and 0≤d3≤0.02.

According to one embodiment of the present invention, the positive electrode active material may include nickel (Ni) in an amount of 70 mol% or more, specifically 80 mol% or more, and more specifically 85 mol% or more, based on the total number of moles of metals excluding lithium.

According to one embodiment of the present invention, the positive electrode active material may include residual lithium in an amount of 0.8 wt% or less based on the total weight of the positive electrode active material. Accordingly, a lithium secondary battery including the positive electrode active material according to the present invention can have excellent performance.

### <Positive Electrode>

The present invention provides a positive electrode including the positive electrode active material.

According to one embodiment of the present invention, the positive electrode includes a positive electrode current collector and a positive electrode active material layer formed on the positive electrode current collector, wherein the positive electrode active material layer includes the positive electrode active material according to the present invention.

Since the positive electrode active material has been described above, a detailed description thereof will be omitted, and only the remaining components will be described in detail below.

According to an embodiment of the present invention, the positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, calcined carbon, or aluminum or stainless steel having a surface treated with carbon, nickel, titanium, silver, etc. Additionally, the positive electrode current collector may typically have a thickness of 3 to 500 µm, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

According to an embodiment of the present invention, the positive electrode active material layer, along with the positive electrode active material, may optionally include a conductive material and a binder, if necessary.

In this case, the positive electrode active material may be included in an amount of 80% to 99% by weight, more specifically 85% to 98.5% by weight, based on the total weight of the positive electrode active material layer. When included in the above-mentioned content range, excellent capacity characteristics can be exhibited.

According to an embodiment of the present invention, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as zinc oxide and potassium titanate; a conductive metal oxide such as a titanium oxide; or a conductive polymer such as a polyphenylene derivative, and any one or a mixture of two or more thereof may be used. The conductive material may be included in an amount of 0.1 to 15% by weight based on the total weight of the positive electrode active material layer.

According to an embodiment of the present invention, the binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and one alone or a mixture of two or more thereof may be used. The binder may be included in an amount of 0.1 to 15% by weight based on the total weight of the positive electrode active material layer.

According to an embodiment of the present invention, the positive electrode may be manufactured according to a conventional positive electrode manufacturing method except for the use of the positive electrode active material described above. Specifically, it may be manufactured by applying a composition for forming a positive electrode active material layer, which is prepared by dissolving or dispersing the above positive electrode active material and, if necessary, optionally a binder, a conductive material, and a dispersant in a solvent, on a positive electrode current collector, and then drying and rolling.

According to an embodiment of the present invention, the solvent may be any solvent commonly used in the art, for example, dimethyl sulfoxide (DMSO), isopropyl alcohol, N-methyl pyrrolidone (NMP), dimethylformamide (DMF), acetone, water, or the like, and one alone or a mixture of two or more thereof may be used. The solvent may be used in an amount sufficient to dissolve or disperse the positive electrode active material, conductive material, binder, and dispersant in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the composition for forming the positive electrode active material layer on a separate support, peeling a film from the support, and then laminating the film on a positive electrode current collector.

### <Lithium Secondary Battery>

The present invention provides a lithium secondary battery including the positive electrode material.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

According to one embodiment of the present invention, the negative electrode current collector is not particularly limited as long as it has a high conductivity without causing a chemical change in a battery, and may be, for example, copper, stainless steel, aluminum, nickel, titanium, calcined carbon, copper or stainless steel that is surface-treated with carbon, nickel, titanium, silver, or the like, an aluminum-cadmium alloy, or the like. Additionally, the negative electrode current collector may typically have a thickness of 3 to 500 µm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

According to one embodiment of the present invention, the negative electrode active material layer optionally includes a binder and a conductive material along with the negative electrode active material.

According to one embodiment of the present invention, as the negative electrode active material, a compound capable of reversible intercalation and deintercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO_{β} (0<β<2), SnO₂, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

According to one embodiment of the present invention, the negative electrode active material may be included in an amount of 80% to 99% by weight based on the total weight of the negative electrode active material layer.

According to one embodiment of the present invention, the binder is a component that assists in bonding between the conductive material, the active material, and the current collector, and is usually added in an amount of 0.1% to 10% by weight based on the total weight of the negative electrode active material layer. Examples of the binder include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

According to one embodiment of the present invention, the conductive material is a component to further improve the conductivity of the negative electrode active material, and may be added in an amount of 10% by weight or less, specifically 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

According to one embodiment of the present invention, the negative electrode active material and optionally a binder and a conductive material may be dissolved or dispersed in a solvent to prepare a composition for forming a negative electrode active material layer, which may be applied on a negative electrode current collector and dried to produce the negative electrode active material layer. Alternatively, the negative electrode active material layer may be manufactured by casting the composition for forming a negative electrode active material layer on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

According to one embodiment of the present invention, as the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable. In this case, excellent electrolyte performance can be obtained by mixing the cyclic carbonate and the chain carbonate in a volume ratio of about 1:1 to about 1:9.

According to one embodiment of the present invention, the lithium salt may be any compound without particular limitation as long as it can provide lithium ions used in a lithium secondary battery. Specifically, the anion of the lithium salt may be at least one selected from the group consisting of F-, Cl-, Br-, I-, NO₃-, N(CN)₂-, BF₄-, CF₃CF₂SO₃-, (CF₃SO₂)₂N-, FSO₂)₂N-, CF₃CF₂(CF₃)₂CO-, (CF₃SO₂)₂CH-, (SF₅)₃C-, (CF₃SO₂)₃C-, CF₃(CF₂)₇SO₃-, CF₃CO₂-, CH3CO2-, SCN- and (CF₃CF₂SO₂)₂N⁻, and the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

According to one embodiment of the present invention, in order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

As described above, since the lithium secondary battery including the positive electrode active material according to the present invention stably exhibits excellent discharge capacity, output characteristics, and lifespan characteristics, it is useful in the field of portable devices such as mobile phones, laptop computers, digital cameras, and electric vehicles such as hybrid electric vehicle (HEV).

Accordingly, a battery module including the lithium secondary battery as a unit cell and a battery pack including the same may be provided.

The battery module or battery pack may be used as a power source for any one or more medium and large-sized devices among a power tool; electric vehicles, including electric vehicles (EV), hybrid electric vehicles, and plug-in hybrid electric vehicles (PHEV); or a system for power storage.

The external shape of the lithium secondary battery is not particularly limited, but may be a cylindrical type using a can, a prismatic type, a pouch type, or a coin type.

The lithium secondary battery can not only be used in battery cells used as a power source for small devices, but can also be preferably used as a unit cell in medium to large-sized battery modules containing multiple battery cells.

Examples of the medium to large-sized devices include electric vehicles, hybrid electric vehicles, plug-in hybrid electric vehicles, power storage systems, etc., but are not limited thereto.

Hereinafter, examples of the present invention will be described in detail so that those skilled in the art can easily implement the present invention. However, the present invention may be embodied in a variety of forms and is not limited to the examples described herein.

### Example 1

### <Preparation of Positive Electrode Active Material Precursor Seed>

NiSO₄, CoSO₄, and MnSO₄ were mixed in deionized water in an amount such that the molar ratio of nickel:cobalt:manganese was 88:5:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 2.59 L of deionized water was added to the reactor, and then nitrogen gas was purged into the reactor at a rate of 5 L/min to remove dissolved oxygen in the water and create a non-oxidizing atmosphere inside the reactor. Thereafter, while continuously purging nitrogen gas into the reactor at a rate of 5 L/min, 14.4 mL of a NaOH aqueous solution having a concentration of 25 wt% and 130.1 mL of a NH₄OH aqueous solution having a concentration of 9 wt% were injected, and then stirred at a stirring speed of 850 rpm at 50°C to adjust the pH in the reactor to 12.5.

Thereafter, while nitrogen gas was continuously purged into the reactor at a rate of 2 L/min and stirring was performed at a stirring speed of 850 rpm, the transition metal solution, the NaOH aqueous solution, and the NH₄OH aqueous solution were continuously injected into the reactor at a rate of 0.29 L/hr, 0.17 L/hr, and 0.04 L/hr, respectively, and a coprecipitation reaction was performed at 50°C and pH 12.25 for 66 hours to generate and grow the nuclei of positive electrode active material precursor particles. Then, after about 20 hours, when the reactor was full, the overflow pipe was opened to secure a seed solution containing positive electrode active material precursor seeds having an average particle diameter (D₅₀) of 1.3 µm. The secured positive electrode active material precursor seeds are 9% of the theoretical yield of the positive electrode active material precursor generated when a reaction of manufacturing positive electrode active material precursor particles described below (hereinafter referred to as a 'finished product reaction') is performed for 24 hours.

The theoretical yield can be calculated by Mathematical Equation 3 below:
[Mathematical Equation 3] 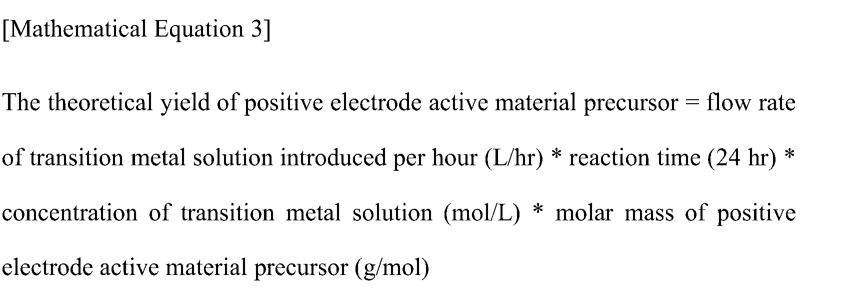 The theoretical yield of positive electrode active material precursor = flow rate of transition metal solution introduced per hour (L/hr) * reaction time (24 hr) * concentration of transition metal solution (mol/L) * molar mass of positive electrode active material precursor (g/mol)

### <Manufacturing of Positive Electrode Active Material Precursor Particle (Finished Product Reaction)>

After a batch reactor was purged with nitrogen to remove dissolved oxygen and create a non-oxidizing atmosphere, the seed solution was filled, the internal temperature of the batch reactor was maintained at 50°C, and the rotation speed was set to 800 rpm. Then, the seed solution was stirred in the batch reactor for 30 minutes.

Thereafter, a transition metal solution having a concentration of 2.4 M, which was prepared by mixing NiSO₄, CoSO₄, and MnSO₄ in deionized water in an amount such that the molar ratio of nickel:cobalt:manganese was 88:5:7, was injected at a rate of 0.96 ml/min, and an ammonium ion-containing solution was injected at a rate of 0.14 ml/min, while a basic aqueous solution was added at a rate such that the pH of the reaction solution was maintained at 11.4. In this case, the internal temperature of the batch reactor was maintained at 50°C, and the rotation speed was reduced to 620 rpm, and then the positive electrode active material precursor particles were grown for a total of 27 hours to manufacture positive electrode active material precursor particles.

The manufactured precursor particles were obtained by filtering through a vacuum filter and drying at 110°C for 15 hours, the composition of the positive electrode active material precursor particles was Ni_{0.88}Co_{0.05}Mn_{0.07}(OH)₂.

### Example 2

The positive electrode active material precursor particles were manufactured in the same manner as in Example 1, except that the secured positive electrode active material precursor seed is 7% of the theoretical yield of the positive electrode active material precursor generated based on 24 hours of finished product reaction, and the positive electrode active material precursor particles are grown for a total of 26.5 hours to manufacture the positive electrode active material precursor particles.

### Example 3

### <Preparation of Positive Electrode Active Material Precursor Seed>

NiSO₄, CoSO₄, and MnSO₄ were mixed in deionized water in an amount such that the molar ratio of nickel:cobalt:manganese was 88:5:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 2150 L of deionized water was added to the reactor, and then nitrogen gas was purged into the reactor at a rate of 120 to 180 L/min to remove dissolved oxygen in the water and create a non-oxidizing atmosphere inside the reactor. Thereafter, while continuously purging nitrogen gas into the reactor at a rate of 120 to 180 L/min, 1,800 to 2,000 g of a NaOH aqueous solution having a concentration of 25 wt% and 9,300 to 9,900 g of a NH₄OH aqueous solution having a concentration of 9 wt% were injected, and then stirred at a stirring speed of 220 rpm at 50°C to adjust the pH in the reactor to 12.5.

Thereafter, while nitrogen gas was continuously purged into the reactor at a rate of 120 to 180 L/min and stirring was performed at a stirring speed of 220 rpm, the transition metal solution, the NaOH aqueous solution, and the NH₄OH aqueous solution were continuously injected into the reactor at a rate of 570 to 590 L/hr, 350 to 370 L/hr, and 55 to 60 L/hr, respectively, and a coprecipitation reaction was performed at 50°C and pH 11.30 to 11.70 for 24 hours to generate and grow the nuclei of positive electrode active material precursor particles. In this case, the coprecipitation reaction was performed while discharging the reaction solution other than the precursor particles present inside using a filter, thereby securing a seed solution containing positive electrode active material precursor seeds having an average particle diameter (D₅₀) of 3.1 µm. It is 4% of the theoretical yield of the positive electrode active material precursor generated when the finished product reaction of the positive electrode active material precursor seed to be introduced is performed for 48 hours.

The theoretical yield can be calculated by Mathematical Equation 3 below:
[Mathematical Equation 3] 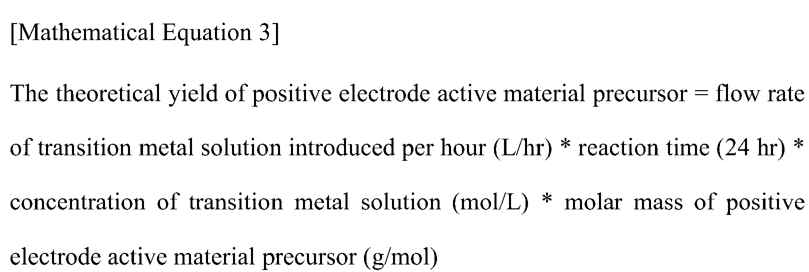 The theoretical yield of positive electrode active material precursor = flow rate of transition metal solution introduced per hour (L/hr) * reaction time (24 hr) * concentration of transition metal solution (mol/L) * molar mass of positive electrode active material precursor (g/mol)

### <Manufacturing of Positive Electrode Active Material Precursor Particle (Finished Product Reaction)>

After the batch reactor was purged with nitrogen to remove dissolved oxygen and create a non-oxidizing atmosphere, the seed solution and 12,900 L of deionized water were filled, the internal temperature of the batch reactor was maintained at 50°C, and 4,000 to 4,100 g of a NaOH aqueous solution having a concentration of 25 wt% and 387,000 to 397,000 g of a NH₄OH aqueous solution having a concentration of 9 wt% were injected, and then stirred at a stirring speed of 50 rpm at 50°C to adjust the pH in the reactor to 11.5.

Thereafter, a transition metal solution having a concentration of 2.4 M, which was prepared by mixing NiSO₄, CoSO₄, and MnSO₄ in deionized water in an amount such that the molar ratio of nickel:cobalt:manganese was 88:5:7, was injected at a rate of 2500 L/min, and an ammonium ion-containing solution was injected at a rate of 370 to 380 L/min, while a basic aqueous solution was added at a rate such that the pH of the reaction solution was maintained at 11.3 to 11.8. In this case, the internal temperature of the batch reactor was maintained at 50°C, and the rotation speed was reduced to 30 rpm, and then the positive electrode active material precursor particles were grown for a total of 48 hours to manufacture positive electrode active material precursor particles. In this case, the coprecipitation reaction was performed while discharging the reaction solution other than the precursor particles present inside using a filter.

The manufactured precursor particles were obtained by filtering through a vacuum filter and drying at 110°C for 15 hours, the composition of the positive electrode active material precursor particles was Ni_{0.88}Co_{0.05}Mn_{0.07}(OH)₂.

### Comparative Example 1

The positive electrode active material precursor particles were manufactured in the same manner as in Example 1, except that the secured positive electrode active material precursor seed is 12% of the theoretical yield of the positive electrode active material precursor generated based on 24 hours of finished product reaction, and the positive electrode active material precursor particles are grown for a total of 30 hours to manufacture the positive electrode active material precursor particles.

### Comparative Example 2

The positive electrode active material precursor particles were manufactured in the same manner as in Example 1, except that the secured positive electrode active material precursor seed is 14% of the theoretical yield of the positive electrode active material precursor generated based on 24 hours of finished product reaction, and the positive electrode active material precursor particles are grown for a total of 34.5 hours to manufacture the positive electrode active material precursor particles.

### Comparative Example 3

NiSO₄, CoSO₄, and MnSO₄ were mixed in deionized water in an amount such that the molar ratio of nickel:cobalt:manganese was 88:5:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 28.5 L of deionized water was added to the reactor, and then nitrogen gas was purged into the reactor at a rate of 8 to 10 L/min to remove dissolved oxygen in the water and create a non-oxidizing atmosphere inside the reactor. Thereafter, while continuously injecting nitrogen gas into the reactor at a rate of 8 to 10 L/min, 210 to 220 g of a NaOH aqueous solution having a concentration of 25 wt% and 1,220 to 1,230 g of a NH₄OH aqueous solution having a concentration of 9 wt% were injected, and then stirred at a stirring speed of 300 rpm at 50°C to adjust the pH in the reactor to 12.4. In this case, the coprecipitation reaction was performed while discharging the reaction solution other than the precursor particles present inside using a filter.

Thereafter, while nitrogen gas was continuously purged into the reactor at a rate of 8 to 10 L/min, and the stirring was performed while slowly lowering the stirring speed from 600 rpm to 360 rpm, the transition metal solution, the NaOH aqueous solution, and the NH₄OH aqueous solution were continuously introduced into the reactor at a rate of 7.75 L/hr, 0.73 L/hr, and 4.5 to 4.8 L/hr, respectively, and the pH was lowered from 12.4 to 11.4 for 16 to 20 hours at 50°C. Thereafter, the pH was maintained until 24 hours of reaction to generate and grow positive electrode active material precursor particles.

The manufactured precursor particles were obtained by filtering through a vacuum filter and drying at 110°C for 15 hours, the composition of the positive electrode active material precursor particles was Ni_{0.88}Co_{0.05}Mn_{0.07}(OH)₂.

### Comparative Example 4

NiSO₄, CoSO₄, and MnSO₄ were mixed in deionized water in an amount such that the molar ratio of nickel:cobalt:manganese was 88:5:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 28.5 L of deionized water was added to the reactor, and then nitrogen gas was purged into the reactor at a rate of 8 to 10 L/min to remove dissolved oxygen in the water and create a non-oxidizing atmosphere inside the reactor. Thereafter, while continuously injecting nitrogen gas into the reactor at a rate of 8 to 10 L/min, 210 to 220 g of a NaOH aqueous solution having a concentration of 25 wt% and 1,220 to 1,230 g of a NH₄OH aqueous solution having a concentration of 9 wt% were injected, and then stirred at a stirring speed of 300 rpm at 50°C to adjust the pH in the reactor to 12.4. In this case, the coprecipitation reaction was performed while discharging the reaction solution other than the precursor particles present inside using a filter.

Thereafter, while nitrogen gas was continuously purged into the reactor at a rate of 8 to 10 L/min, and the stirring was performed while slowly lowering the stirring speed from 600 rpm to 300 rpm, the transition metal solution, the NaOH aqueous solution, and the NH₄OH aqueous solution were continuously introduced into the reactor at a rate of 7.87 L/hr, 0.73 L/hr, and 4.5 to 4.8 L/hr, respectively, and the pH was lowered from 12.4 to 11.1 for 16 to 20 hours at 50°C. Thereafter, the pH was maintained until 26 hours of reaction to generate and grow positive electrode active material precursor particles.

The manufactured precursor particles were obtained by filtering through a vacuum filter and drying at 110°C for 15 hours, the composition of the positive electrode active material precursor particles was Ni_{0.88}Co_{0.05}Mn_{0.07}(OH)₂.

### Comparative Example 5

NiSO₄, CoSO₄, and MnSO₄ were mixed in deionized water in an amount such that the molar ratio of nickel:cobalt:manganese was 89:4:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 4 L of deionized water was added to the reactor, and then nitrogen gas was purged into the reactor at a rate of 4 to 6 L/min to remove dissolved oxygen in the water and create a non-oxidizing atmosphere inside the reactor. Thereafter, while continuously injecting nitrogen gas into the reactor at a rate of 4 to 6 L/min, 30 to 35 g of a NaOH aqueous solution having a concentration of 25 wt% and 150 to 155 g of a NH₄OH aqueous solution having a concentration of 9 wt% were injected, and then stirred at a stirring speed of 300 rpm at 50°C to adjust the pH in the reactor to 12.5.

Thereafter, while nitrogen gas was continuously purged into the reactor at a rate of 4 to 6 L/min, and the stirring was performed while slowly lowering the stirring speed from 900 rpm to 500 rpm, the transition metal solution, the NaOH aqueous solution, and the NH₄OH aqueous solution were continuously introduced into the reactor at a rate of 0.96 L/hr, 0.13 L/hr, and 0.56 to 0.58 L/hr, respectively, and the pH was lowered from 12.5 to 11.8 for 6 to 10 hours at 50°C. Thereafter, the pH was maintained until 68 hours of reaction to generate and grow positive electrode active material precursor particles. In this case, the coprecipitation reaction was performed while discharging the reaction solution other than the precursor particles present inside using a filter.

The manufactured precursor particles were obtained by filtering through a vacuum filter and drying at 110°C for 15 hours, the composition of the positive electrode active material precursor particles was Ni_{0.89}Co_{0.04}Mn_{0.07}(OH)₂.

### Comparative Example 6

NiSO₄, CoSO₄, and MnSO₄ were mixed in deionized water in an amount such that the molar ratio of nickel:cobalt:manganese was 60:10:30 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 2.9 L of deionized water was added to the reactor, and then nitrogen gas was purged into the reactor at a rate of 4 to 6 L/min to remove dissolved oxygen in the water and create a non-oxidizing atmosphere inside the reactor. Thereafter, while continuously injecting nitrogen gas into the reactor at a rate of 4 to 6 L/min, 20 to 26 g of a NaOH aqueous solution having a concentration of 25 wt% and 110 to 120 g of a NH₄OH aqueous solution having a concentration of 9 wt% were injected, and then stirred at a stirring speed of 300 rpm at 50°C to adjust the pH in the reactor to 12.5. In this case, the coprecipitation reaction was performed while discharging the reaction solution other than the precursor particles present inside using a filter.

Thereafter, while nitrogen gas was continuously purged into the reactor at a rate of 4 to 6 L/min, and the stirring was performed while slowly lowering the stirring speed from 1,000 rpm to 400 rpm, the transition metal solution, the NaOH aqueous solution, and the NH₄OH aqueous solution were continuously introduced into the reactor at a rate of 0.77 L/hr, 0.46 L/hr, and 0.10 to 0.11 L/hr, respectively, and the pH was lowered from 12.5 to 11.9 for 18 to 22 hours at 50°C. Thereafter, the pH was maintained until 30 hours of reaction to generate and grow positive electrode active material precursor particles.

The manufactured precursor particles were obtained by filtering through a vacuum filter and drying at 110°C for 15 hours, the composition of the positive electrode active material precursor particles was Ni_{0.60}Co_{0.10}Mn_{0.30}(OH)₂.

### Comparative Example 7

NiSO₄, CoSO₄, and MnSO₄ were mixed in deionized water in an amount such that the molar ratio of nickel:cobalt:manganese was 88:5:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 2250 L of deionized water was added to the reactor, and then nitrogen gas was purged into the reactor at a rate of 190 to 210 L/min to remove dissolved oxygen in the water and create a non-oxidizing atmosphere inside the reactor. Thereafter, while continuously injecting nitrogen gas into the reactor at a rate of 190 to 210 L/min, 16,000 to 16,400 g of a NaOH aqueous solution having a concentration of 25 wt% and 94,300 to 94,700 g of a NH₄OH aqueous solution having a concentration of 9 wt% were injected, and then stirred at a stirring speed of 150 rpm at 50°C to adjust the pH in the reactor to 12.7. In this case, the coprecipitation reaction was performed while discharging the reaction solution other than the precursor particles present inside using a filter.

Thereafter, while nitrogen gas was continuously purged into the reactor at a rate of 190 to 210 L/min, and the stirring was performed while slowly lowering the stirring speed from 220 rpm to 76 rpm, the transition metal solution, the NaOH aqueous solution, and the NH₄OH aqueous solution were continuously introduced into the reactor at a rate of 588 L/hr, 353 L/hr, and 56 to 60 L/hr, respectively, and the pH is lowered from 12.4 to 11.4 for 6 to 10 hours at 50°C. Thereafter, the pH was maintained until 20 hours of reaction to generate and grow positive electrode active material precursor particles.

The manufactured precursor particles were obtained by filtering through a vacuum filter and drying at 110°C for 15 hours, the composition of the positive electrode active material precursor particles was Ni_{0.88}Co_{0.05}Mn_{0.07}(OH)₂.

### Comparative Example 8

NiSO₄, CoSO₄, and MnSO₄ were mixed in deionized water in an amount such that the molar ratio of nickel:cobalt:manganese was 88:5:7 to prepare a transition metal solution having a concentration of 2.4 M. A container containing the transition metal solution, a container containing a NaOH aqueous solution having a concentration of 25 wt%, and a container containing a NH₄OH aqueous solution having a concentration of 9 wt% were each connected to a continuous stirred tank reactor. Then, 2,550 to 2,650 L of deionized water was added to the reactor, and then nitrogen gas was injected into the reactor at a rate of 3,000 to 3,300 L/min to remove dissolved oxygen in the water and create a non-oxidizing atmosphere inside the reactor. Thereafter, while continuously injecting nitrogen gas into the reactor at a rate of 3,000 to 3,300 L/min, 16,200 to 16,400 g of a NaOH aqueous solution having a concentration of 25 wt% and 94,500 to 94,700 g of a NH₄OH aqueous solution having a concentration of 9 wt% were injected, and then stirred at a stirring speed of 900 rpm at 33 to 42°C to adjust the pH in the reactor to 12.0. In this case, the coprecipitation reaction was performed while discharging the reaction solution other than the precursor particles present inside using a filter.

Thereafter, while nitrogen gas was continuously purged into the reactor at a rate of 900 to 1,100 L/min, and the stirring was performed while slowly lowering the stirring speed from 2,220 rpm to 900 rpm, the transition metal solution, the NaOH aqueous solution, and the NH₄OH aqueous solution were continuously introduced into the reactor at a rate of 800 to 850 L/hr, 430 to 470 L/hr, and 80 to 95 L/hr, respectively, and the pH was lowered from 12.0~12.2 to 10.5~10.7 for 2~4 hours at 33~42°C. Thereafter, the pH was increased to 11.4~11.6 and the pH was maintained until 60 hours of reaction to generate and grow positive electrode active material precursor particles.

The manufactured precursor particles were obtained by filtering through a vacuum filter and drying at 110°C for 15 hours, the composition of the positive electrode active material precursor particles was Ni_{0.88}Co_{0.05}Mn_{0.07}(OH)₂.

### Experimental Example 1: Analysis of Positive Electrode Active Material Precursor

* Evaluation of particle size and particle size distribution: The particle size of each of the positive electrode active material precursors manufactured in Examples 1 to 3 and Comparative Examples 1 to 8 was measured (based on a refractive index of 1.55) using a particle size distribution measuring device (S-3500, Microtrac), and the results were shown in Table 1 below.
* Evaluation of tap density: 50 g of the positive electrode active material precursors manufactured in Examples 1 to 3 and Comparative Examples 1 to 8 were each filled into a 100 mL container, and an apparent density of the particles obtained by vibrating 3000 times with a 40 mm stroke was measured. Specifically, the tap density of the positive electrode active material precursor was measured using a tap density tester (KYT-4000, Seishin). The measurement results were shown in Table 1 below.
* Evaluation of sphericity: The sphericity of the positive electrode active material precursors manufactured in Examples 1 to 3 and Comparative Examples 1 to 8 was confirmed using a scanning electron microscope (SEM). The sphericity value of each positive electrode active material precursor particle in each SEM image was measured using Mathematical Equation 1 below, and then the average value thereof was obtained, which was shown as the average sphericity value in Table 1 below.
[Mathematical Equation 1] $Sphericity = 4 π \times \frac{A}{{P}^{2}}$
wherein:
A is an area on the plane shown in the SEM image of the particle measured by shape analysis of the SEM image, and
P is a circumference on the plane shown in the SEM image of the particle measured by shape analysis of the SEM image.

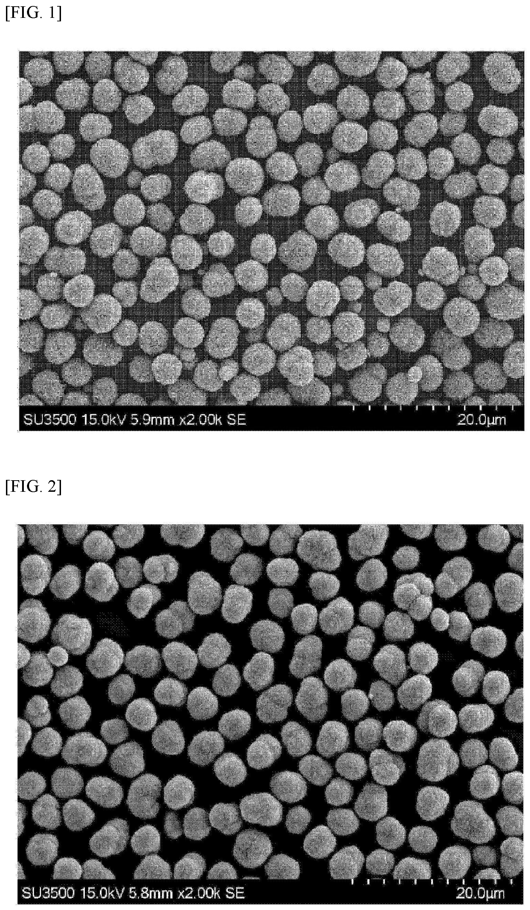

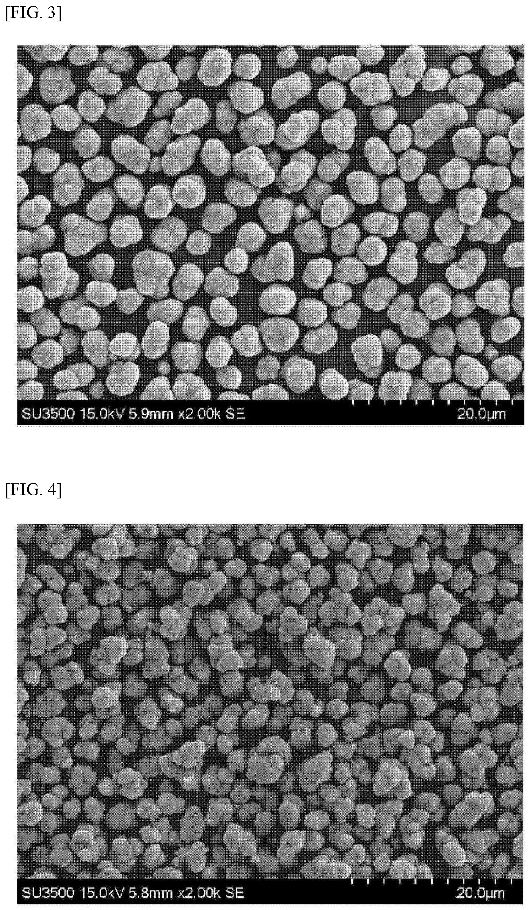

* Multi-particle ratio: FIGS. 1 to 5 are SEM images (2k) showing positive electrode active material precursors manufactured in Examples 1 to 3 and Comparative Examples 1 and 2 in order, respectively. In each SEM image, an aspect ratio value, which is a ratio of a major axis length to a minor axis length on a plane shown in the SEM image of each positive electrode active material precursor particle, was obtained, and a multi-particle ratio was obtained by obtaining a ratio of particles having an aspect ratio value less than 1.4.

**[Table 1]**

| | | Example | | | Comparative Example | | | | | | | |
|---|---|---|---|---|---|---|---|---|---|---|---|---|
| | | 1 | 2 | 3 | 1 | 2 | 3 | 4 | 5 | 6 | 7 | 8 |
| Particl e size (µm) | D50 | 4.3 | 4.3 | 9.85 | 4.2 | 4.2 | 3.14 | 3.01 | 5.01 | 5.93 | 3.13 | 10.01 |
| | D5 | 2.9 | 2.9 | 7.59 | 2.9 | 2.7 | 0.39 | 0.34 | 0.71 | 0.96 | 0.99 | 7.62 |
| | D95 | 6.3 | 6.2 | 13.9 4 | 6.5 | 6.5 | 4.79 | 4.5 | 6.88 | 10.9 | 4.83 | 14.22 |
| | Dmin | 0.3 | 0.3 | 6.00 | 0.3 | 0.6 | 0.2 | 0.21 | 0.32 | 0.41 | 0.36 | 6.00 |
| | Dma x | 9.2 | 9.3 | 22.0 0 | 11 | 11 | 7.78 | 7.7 | 8.36 | 14.5 | 5.92 | 22.00 |
| | Span value | 0.79 | 0.77 | 0.64 | 0.83 | 0.91 | 1.4 | 1.17 | 1.23 | 0.49 | 1.23 | 0.66 |
| Tap density (g/ml) | | 1.97 | 1.92 | 1.96 | 1.89 | 1.84 | 1.71 | 1.65 | Not analy zed | Not analy zed | 1.65 | 1.96 |
| Sphericity average value | | 0.79 1 | 0.81 8 | 0.89 3 | 0.743 | 0.719 | 0.83 | 0.79 | 0.82 | 0.59 | 0.8 | 0.872 |
| Multi-particle ratio(%) | | 5.6 | 5.6 | 3.83 0 | 7.9 | 33.5 | 3.91 | 4.55 | 2.74 | 41.9 | 18.45 | 6.670 |

Referring to Table 1 above, it could be confirmed that in the case of the positive electrode active material precursors according to Examples 1 to 3 in which the content of the positive electrode active material precursor seed introduced into the batch reactor satisfied an appropriate level, excellent span values, sphericity, and multi-particle ratios were exhibited. It could be confirmed that in the case of the positive electrode active material precursors according to Comparative Examples 1 and 2 in which the content of the positive electrode active material precursor seed introduced into the batch reactor was more than an appropriate amount, the multi-particle ratio was significantly increased compared to Examples 1 to 3.

Comparative Examples 3 to 8, which were manufactured by a manufacturing method in which the step (S1) of preparing a seed solution was not performed, are as follows:
It could be confirmed that the positive electrode active material precursors according to Comparative Examples 3 to 5 had higher span values compared to Examples 1 to 3. In addition, it could be confirmed that the positive electrode active material precursor according to Comparative Example 6 had a significantly increased multi-particle ratio and inferior sphericity compared to Examples 1 to 3. In addition, it could be confirmed that the positive electrode active material precursor according to Comparative Example 7 had a higher span value and increased multi-particle ratio compared to Examples 1 to 3. The positive electrode active material precursor according to Comparative Example 8 showed a high multi-particle ratio.

Through the above comparative examples, it was confirmed that there was a limit to excellent improvement in all of the span value, sphericity, and multi-particle ratio when step (S1) is not performed during the manufacture of the positive electrode active material precursor.

### Experimental Example 2: Confirmation of Residual Lithium Amount

The positive electrode active material precursors manufactured in the above examples and comparative examples and a lithium source of LiOH were injected into a Henschel mixer (700 L) so that the molar ratio (Li/M) of lithium (Li) of the lithium source to the total metal elements (M) was 1.030, and mixed at 300 rpm in the center for 20 minutes. The mixed powder was placed in an alumina crucible, heated at 5°C/min, and calcined at 800-900°C for 10 hours in an atmosphere with an oxygen concentration of 85-95% to produce a lithium transition metal oxide.

5 g of the lithium transition metal oxide was added to 100 g of distilled water and mixed for 5 minutes, followed by filtering. After filtering, the amounts of Li₂CO₃ and LiOH dissolved in the distilled water were measured by titration method (using 0.1 N HCl) using a pH meter.

**[Table 2]**

| | Li₂CO₃ (wt%) | LiOH(wt%) |
|---|---|---|
| Example 3 | 0.215 | 0.403 |
| Comparative Example 9 | 0.398 | 0.390 |

As shown in Table 2 above, it can be confirmed that the value of Li₂CO₃ was reduced by about 45% in Example 3 compared to Comparative Example 9. This means that the formation of the layered structure of the positive electrode active material and the insertion of the Li source into the layered structure were facilitated by uniform heat treatment, and additionally, the generation of gas causing insulation and swelling during charging and discharging was reduced due to the reduction in Li₂CO₃.

### Experimental Example 3: Evaluation of Battery Performance

Each of the positive electrode active materials produced in the examples and comparative examples, carbon black as a conductive material, and polyvinylidene fluoride (PVDF) as a binder were mixed in an N-methylpyrrolidone (NMP) solvent at a ratio of 96:2:2 to prepare a positive electrode slurry. The positive electrode slurry was applied to one surface of an aluminum current collector, dried at 150°C, and rolled to manufacture a positive electrode.

A lithium metal electrode was used as a negative electrode, and a porous polyethylene separator was interposed between the positive and negative electrodes to manufacture an electrode assembly, which was then positioned inside a battery case, and an electrolyte was injected into the case to manufacture a half-cell. In this case, the electrolyte was manufactured by dissolving 0.7M LiPF₆ in an organic solvent prepared by mixing ethylene carbonate (EC):ethyl methyl carbonate (EMC) in a volume ratio of 3:7.

For each of the half-cells manufactured in this way, the initial charge capacity and initial discharge capacity were measured while charging at 0.5C to 4.2 V in CC-CV mode at 25°C and discharging at a constant current of 1C to 3.0 V, and the initial efficiency was calculated. For reference, the initial efficiency value is a percentage value of the initial discharge capacity to the initial charge capacity.

**[Table 3]**

| | Initial charge capacity (mAh/g) | Initial discharge capacity (mAh/g) | Initial efficiency (%) |
|---|---|---|---|
| Example 3 | 232.09 | 212.20 | 91.43 |
| Comparative Example 9 | 227.86 | 203.80 | 89.44 |

As shown in Table 3 above, it can be confirmed that the initial charge/discharge capacity and efficiency of a lithium secondary battery are improved when the positive electrode active material precursor according to the present invention is used.

## Claims

1. A positive electrode active material precursor having:
an average value of sphericity according to Mathematical Equation 1 below of 0.73 or more and 1.0 or less,
a span value according to Mathematical Equation 4 below of 0.4 or more and 0.9 or less, and
a ratio of multi-particles, which are particles having an aspect ratio value of less than 1.4 obtained by shape analysis of an SEM image, of 6% or less: [Mathematical Equation 1] $Sphericity = 4 π \times \frac{A}{{P}^{2}}$ wherein:
A is an area of the particle measured by shape analysis of an SEM image, and
P is a circumference of the particle measured by shape analysis of an SEM image. [Mathematical Equation 4] $Span = \left({D}_{95}-{D}_{5}\right) / {D}_{50}$

2. The positive electrode active material precursor according to claim 1, wherein the span value according to Mathematical Equation 1 above is 0.60 or more and 0.85 or less.

3. The positive electrode active material precursor according to claim 1, wherein the ratio of multi-particles is 4% or less.

4. The positive electrode active material precursor according to claim 1, wherein the average value of sphericity is 0.75 or more and 0.90 or less.

5. The positive electrode active material precursor according to claim 1, wherein the positive electrode active material precursor has an average particle diameter (D₅₀) of 2 µm or more and 11 µm or less.

6. A method for manufacturing a positive electrode active material precursor, comprising the steps of:
(S1) continuously introducing and mixing a transition metal-containing solution, an ammonium cation complex forming agent, and a basic aqueous solution into a continuous stirred tank reactor (CSTR) to prepare a seed solution including a positive electrode active material precursor seed; and
(S2) introducing the seed solution prepared in step (S1) into a batch reactor and stirring the seed solution, and then introducing a transition metal-containing solution, an ammonium cation complex forming agent, and a basic aqueous solution to grow positive electrode active material precursor particles,
wherein the content of the positive electrode active material precursor seed included in the seed solution introduced into the batch reactor in step (S2) is 4% or more and 11% or less of the theoretical yield of the positive electrode active material precursor finally manufactured.

7. The method for manufacturing a positive electrode active material precursor according to claim 6, wherein the content of the positive electrode active material precursor seed included in the seed solution introduced into the batch reactor in step (S2) is 4% or more and 9% or less of the theoretical yield of the positive electrode active material precursor finally manufactured.

8. The method for manufacturing a positive electrode active material precursor according to claim 6, wherein in the step (S2), a concentration of the ammonium cation complex forming agent in a reactant and a pH of the reactant are controlled to be the same as in the step (S1).

9. A positive electrode active material, which is a calcined product of a mixture of the positive electrode active material precursor according to claim 1 and a lithium raw material.

10. A lithium secondary battery comprising the positive electrode active material according to claim 9.
